Europäisches Patentamt

**European Patent Office**

Office européen des brevets

(11) Veröffentlichungsnummer: **0 158 814**
**A2**

---

(12) **EUROPÄISCHE PATENTANMELDUNG**

(21) Anmeldenummer: **85102696.3**

(22) Anmeldetag: **09.03.85**

(51) Int. Cl.⁴: **B 29 C 47/00**
**B 29 C 47/12, B 29 C 47/36**
**B 29 C 47/92**

---

(30) Priorität: **17.04.84 DE 3414444**

(43) Veröffentlichungstag der Anmeldung:
**23.10.85 Patentblatt 85/43**

(84) Benannte Vertragsstaaten:
**AT BE CH DE FR GB IT LI LU NL SE**

(71) Anmelder: **Continental Gummi-Werke
Aktiengesellschaft
Königsworther Platz 1
D-3000 Hannover 1(DE)**

(72) Erfinder: **Bernitz, Bernhard
Langenforther Strasse 60
D-3000 Hannover 51(DE)**

(72) Erfinder: **Hermann, Dietmar, Dipl.-Ing.
Kantstrasse 7
D-3008 Garbsen 6(DE)**

---

(54) **Strangpresse.**

(57) Zum Herstellen von Profilsträngen aus elastomeren oder thermoplastischen Stoffen mit abschnittsweise veränderter Querschnittsform sind Strangpressen in Gebrauch, die mit Einrichtungen zum wechselweisen einstellbaren Abdecken und Freigeben des Austrittsquerschnittes der Preßdüse versehen sind. Die mit Änderungen des Düsenquerschnittes verbundenen Druckänderungen im Innern des Preßkopfes, die stets unerwünschte Maßabweichungen der fertigen Profilstränge nach sich ziehen, wird erfindungsgemäß dadurch begegnet, daß das Aufnahmevolumen des Preßkopfes in Abhangigkeit von den Änderungen des Düsenquerschnittes verändert wird, beispielsweise durch den Aufbau des Preßkopfes selbst aus mehreren gegeneinander verstellbaren Teilen oder durch Anschließen zusätzlicher äußerer Aufnahmebehälter änderbaren Volumens an den Preßkopf-Innenraum.

**FIG. 2**

EP 0 158 814 A2

0158814

Continental Gummi-Werke Aktiengesellschaft, 3000 Hannover

Strangpresse

Die Erfindung bezieht sich auf Strangpressen zum kontinuierlichen Formen von plastisch-viskosen Mischungen elastomerer oder thermoplastischer Stoffe, mit einem die auszupressende Mischung aufnehmenden Preßkopf und einer diesen abschließenden Strangpreßdüse, deren formgebender freier Durchgangsquerschnitt änderbar ist.

Profilstränge aus Gummi oder gummiähnlichen elastischen Kunststoffen, wie sie beispielsweise zum dichtenden Einfassen von Fensterscheiben, Türen und Kofferraumdeckeln an Kraftfahrzeugen oder auch zum Ausstatten von Gebäuden und für ähnliche Einsatzzwecke Verwendung finden, werden mit Vorteil in praktisch unbegrenzten Längen durch Strangpressen hergestellt. Mit Hilfe von Strangpreßdüsen änderbaren Durchgangsquerschnittes ist es dabei auch möglich, den Querschnitt der ausgepreßten Profilstränge abschnittsweise einzuschnüren, was in der Praxis häufig zum besseren Anpassen der Profilstränge an Besonderheiten der jeweils vorliegenden Einbaubedingungen gefordert wird. Nach bekannten Vorschlägen ist der Strangpreßdüse hierzu eine bestimmte Teilabschnitte ihres freien Austrittsquerschnittes zeitweise überdeckende Absperrvorrichtung in Form einer quer zu der Austrittsrichtung der Profilstränge beweglichen Blende, eines Schiebers od. dgl. zugeordnet, wodurch das sonst notwendige nachträgliche Beschneiden der fertigen Profilstränge entfällt. Im praktischen Einsatz solcher Strangpressen zeigte sich dann aber als störender Umstand die Erscheinung, daß Änderungen des Düsenquerschnittes den Druckzustand der in den Preßkopf stetig hineingeförderten Preßmasse beeinflussen und in letzter Folge unkontrollierbare Maßabweichungen des austretenden Profilstranges nach sich ziehen. Es ist die Aufgabe der Erfindung, diese nachteiligen Einflüsse durch eine neuartige Gestaltung der Strangpressen noch im Entstehen zu unterdrücken und wirkungsmäßig auszugleichen und die Fertigung in allen Teilen maßgenauer Profilstränge ohne Rücksicht auf abschnittsweise über ihre Länge eingeformte Querschnittsänderungen zu gewährleisten.

Zum Lösen der gestellten Aufgabe sieht die Erfindung für Strangpressen der eingangs geschilderten Gattung vor, daß das Aufnahmevolumen des Preßkopfes in Abhängigkeit von den Änderungen des Durchgangsquerschnittes der Strangpreßdüse änderbar ist. Die Verwirklichung des Erfindungsgedankens ist in verschiedener Weise und mit verschiedenen Mitteln möglich. So kann gemäß einem Teilmerkmal der Preßkopf beispielsweise dichtend ineinandergesetzte und teleskopartig gegeneinander verschiebbare Ringelemente aufweisen. Nach einem anderen Teilmerkmal der Erfindung können stattdessen ein oder mehrere von außerhalb des Preßkopfes dichtend durch dessen Wandung geführte und in änderbarer Tiefe in seinen Innenraum eintauchende, kolbenartig hin- und herbewegliche Verdrängkörper vorgesehen sein. Wahlweise kann gemäß einem weiteren Teilmerkmal der Innenraum des Preßkopfes mit einem zusätzlichen äußeren Behälter änderbaren Volumens in ständig offener Überströmverbindung stehen, in welchem Falle der zusätzliche Behälter vorteilhaft als Zylinder mit einem dichtend hin- und herbeweglichen Kolben ausgebildet ist.

Die Erfindung führt zu einem nach den besonderen Belangen des Formungsvorganges gesteuerten zeitweisen Abziehen von Preßmasse aus dem und Zurückspeisen in den Preßkopf, womit in unmittelbarer Folge ein in engen Grenzen konstanter Innendruck aufrechterhalten und dadurch in letzter Konsequenz eine wichtige Voraussetzung für das Herstellen maßgenauer Profilstränge geschaffen wird. Um die mit diesen Mitteln vorgegebenen vorteilhaften Möglichkeiten im vollen Umfang auszuschöpfen, empfiehlt es sich, in Weiterbildung der Erfindung ein Rechnersystem zum Beeinflussen von das Aufnahmevolumen des Preßkopfes ändernden Stellorganen, z.B. in einen Druckmittelkreis eingeschalteten Verdrängerzellen oder Arbeitszylindern mit druckmittelbeaufschlagten Kolben,
nach Maßgabe der Änderungen des Düsenquerschnittes vorzusehen.

Es liegt im Rahmen der Erfindung, das Rechnersystem auf eine Änderungen des Düsenquerschnittes zeitlich vorausgehende Beeinflussung des Preßkopfvolumens zu schalten. Ebenso gehört es zur Erfindung, einen oder mehrere den statischen Druck der in dem Preßkopf befindlichen Mischung fortlaufend abtastende und zusätzlich dessen Aufnahmevolumen beeinflussende Drucksensoren vorzusehen.

Die Erfindung ist anhand der schematischen Darstellung verschiedener Ausführungsformen in der Zeichnung verdeutlicht. In der Zeichnung ist:

Fig. 1    ein Querschnitt durch den Preßkopf einer neuartigen
          Strangpresse;

Fig. 2    ein gleichartiger Querschnitt durch einen Preßkopf anderer
          Ausführungsform;

Fig. 3    ein Längsschnitt durch einen Preßkopf nach einer weiteren
          Ausführungsform der Erfindung und

Fig. 4    eine Fig. 3 gleichartige Darstellung einer weiteren Variante
          der Erfindung.

Der Übersichtlichkeit halber ist auf die Wiedergabe vollständiger Strangpressen verzichtet und in der Zeichnung nur das zum Verständnis der Erfindung Wesentliche dargestellt.

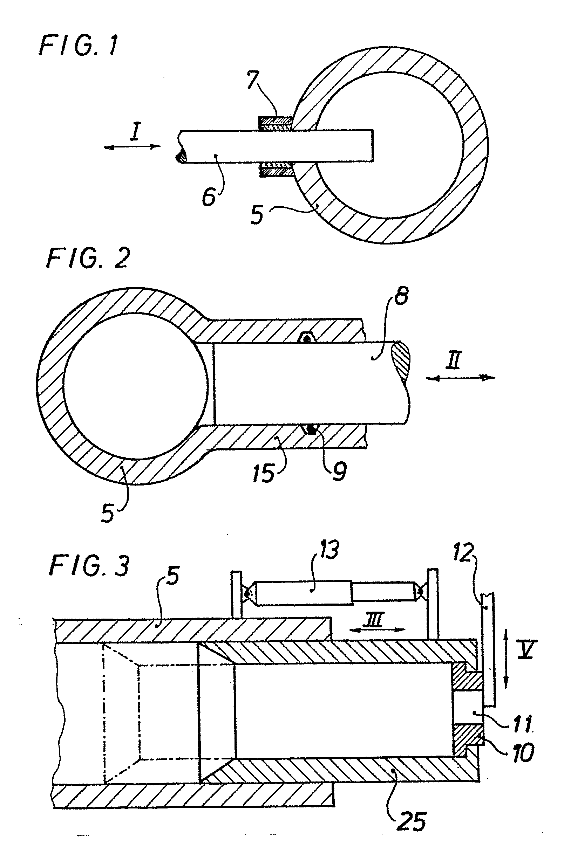

Der in Fig. 1 im Querschnitt angedeutete Preßkopf 5 bildet den Austrittsteil einer an sich bekannten Strangpresse, in den plastifizierte Kautschukmischung unter der Einwirkung der Preßschnecke vorgeschoben und kontinuierlich durch das abschließende Mundstück mit der formgebenden Düse ausgepreßt wird. In die Wandung des Preßkopfes sind ein oder mehrere zylindrische Stifte 6 mit Hilfe fest angebrachter äußerer Führungen 7 dichtend und im Sinne des Doppelpfeiles I gleitend hin- und herbeweglich eingesetzt. Die Stifte 6 ragen in den von der Preßmasse ausgefüllten Raum zwischen Schnecke und Mundstück in veränderlicher Tiefe hinein und wirken als Verdrängerkörper, die je nach ihrer axialen Einstellung das der Preßmasse verfügbare Aufnahmevolumen mehr oder weniger in Anspruch nehmen. Über nicht gezeichnete Antriebs- mittel, beispielsweise Zahnstange mit Ritzel und Getriebemotor, Druckmittel-Arbeitszylinder od. dgl. können die Stifte stufenlos verschoben werden, wobei durch ein Rechnersystem die Abhängigkeit von praktisch gleichzeitig ablaufenden Änderungen der Düsenöffnung hergestellt wird.

In dem Ausführungsbeispiel gemäß Fig. 2 ist der Preßkopf 5 mit einem unmittelbar angesetzten und nach seinem Innenraum hin ständig offenen Zylinder 15 mit gleitend darin beweglichem Kolben 8 versehen. Der Kolben 8 ist mit Hilfe eines Dichtringes 9 abgedichtet in dem Zylinder 15 im Sinne des Doppelpfeiles II verschiebbar geführt und steht seinerseits unter dem Einfluß nicht gezeichneter Antriebsmittel, die seine Stellung in Abhängigkeit von Änderungen der Düsenöffnung bestimmen. In diesem Falle bildet der Zylinder 15 ein Zusatzvolumen, das wechselweise Preßmasse in genau dosierbaren Mengen aufnehmen und wieder abgeben kann. In gleicher Weise wie mit dem Einsatz von Verdrängerkörpern gemäß Fig. 1 wird damit ebenfalls die Aufrechterhaltung zumindest angenähert gleichbleibender Druckverhältnisse im Inneren des Preßkopfes 5 erreicht.

Die in Fig. 3 im Axialschnitt dargestellte Ausführungsform eines Preßkopfes macht von einem wiederum anderen Prinzip Gebrauch. In diesem Falle ist der Preßkopf 5 selbst volumenveränderlich gestaltet und zu diesem Zweck mit einem teleskopartig dichtend eingesetzten und im Sinne des Doppelpfeiles III verschiebbaren Gehäusevorderteil 25 ausgebildet. Das letztere trägt als vorderen Abschluß das Mundstück 10 mit der formgebenden Düse 11, deren wirksamer Durchgangsquerschnitt in an sich bekannter Weise durch einen unmittelbar vor der Düsenöffnung in Querrichtung im Sinne des Doppelpfeiles V beweglichen Schie-

- 5 -

0158814

ber 12 nach Bedarf verändert werden kann. Mittels eines zwischen festen Anschlägen an dem Preßkopf 5 einerseits und dem Gehäusevorderteil 25 andererseits wirksamen Druckmittelarbeitszylinders 13 ist die Stellung des Vorderteiles relativ zum Preßkopf und damit dessen Aufnahmevolumen in Abhängigkeit von der Stellung des Schiebers 12 mit dem Ziel konstanten Druckes zu regeln. Die Zeichnung zeigt das Gehäusevorderteil 25 in weit ausgezogener, größtem Volumen entsprechender Stellung, während demgegenüber die im linken Teil der Zeichnung gestrichelt angedeutete innere Endstellung dem geringsten Volumen entspricht.

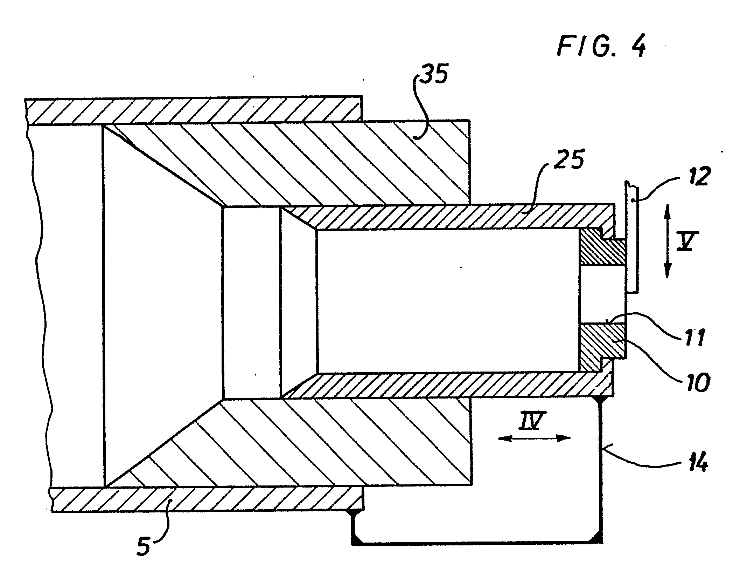

Die Bewegungen des Gehäusevorderteiles 25 bringen notwendig auch Bewegungen des Mundstückes 10 relativ zu den Abzugsvorrichtungen und anderen nachgeordneten Einrichtungen und ebenso des Verstellmechanismus für den Schieber 12 mit sich. Dieser Nachteil ist mit der in Fig. 4 gezeichneten dreiteiligen Ausbildung des Preßkopfes vermieden, wobei zwischen den eigentlichen Preßkopf 5 und das über angedeutete Verbindungselemente 14 starr damit zusammenhängende Gehäusevorderteil 25 ein im Sinne des Doppelpfeiles IV hin- und herbeweglicher Gehäusering 35 abgedichtet eingesetzt ist. Unter der Einwirkung nichtgezeichneter Antriebsmittel kann der Gehäusering 35 in Abhängigkeit von den Bewegungen des Schiebers 12 nach innen und nach außen in bezug auf den Preßkopf 5 verschoben werden. Die Auswirkungen sind die gleichen wie im Zusammenhang mit Fig. 3 beschrieben.

Patentansprüche:

1. Strangpresse zum kontinuierlichen Formen von plastisch-viskosen Mischungen elastomerer oder thermoplastischer Stoffe, mit einem die auszupressende Mischung aufnehmenden Pressenkopf und einer diesen abschließenden Strangpreßdüse, deren formgebender freier Durchgangsquerschnitt änderbar ist, dadurch gekennzeichnet, daß das Aufnahmevolumen des Preßkopfes (5) in Abhängigkeit von den Änderungen des Durchgangsquerschnittes der Strangpreßdüse (11) änderbar ist.

2. Strangpresse nach Anspruch 1, dadurch gekennzeichnet, daß der Preßkopf (5) dichtend ineinandergesetzte und teleskopartig gegeneinander verschiebbare Ringelemente (25; 35) aufweist.

3. Strangpresse nach Anspruch 1, gekennzeichnet durch einen oder mehrere von außerhalb des Preßkopfes (5) dichtend durch dessen Wandung geführte und in änderbarer Tiefe in seinen Innenraum eintauchende, kolbenartig hin- und herbewegliche Verdrängerkörper (6).

4. Strangpresse nach Anspruch 1, dadurch gekennzeichnet, daß der Innenraum des Preßkopfes (5) mit einem zusätzlichen äußeren Behälter (15) änderbaren Volumens in ständig offener Überströmverbindung steht.

5. Strangpresse nach Anspruch 4, dadurch gekennzeichnet, daß der zusätzliche Behälter (15) als Zylinder mit einem dichtend hin- und herbeweglichen Kolben (8) ausgebildet ist.

6. Strangpresse nach den Ansprüchen 1 bis 5, dadurch gekennzeichnet, daß ein Rechnersystem zum Beeinflussen von das Aufnahmevolumen des Preßkopfes (5) ändernden Stellorganen nach Maßgabe der Änderungen des Düsenquerschnittes vorgesehen ist.

7. Strangpresse nach Anspruch 6, dadurch gekennzeichnet, daß die Stellorgane in einen Druckmittelkreis eingeschaltete Verdrängerzellen, z.B. Arbeitszylinder (13) mit druckmittelbeaufschlagtem
Kolben sind.

8. Strangpresse nach Anspruch 6, dadurch gekennzeichnet, daß das
Rechnersystem auf eine Änderungen des Düsenquerschnittes zeitlich
vorausgehende Beeinflussung des Preßkopfvolumens schaltbar ist.

9. Strangpresse nach Anspruch 6, gekennzeichnet durch einen oder mehrere den statischen Druck der in dem Preßkopf (5) befindlichen
Mischung fortlaufend abtastende und zusätzlich dessen Aufnahmevolumen beeinflussende Drucksensoren.

Hannover, den 10. April 1984
Sü/Lo

0158814

FIG. 1

FIG. 2

FIG. 3

FIG. 4